# EUROPEAN PATENT APPLICATION

(11) **EP 4 571 193 A1**
(43) Date of publication of application: **18.06.2025**
(21) Application number: 24215294.0
(22) Date of filing: 26.11.2024
(51) Int. Cl.: F23R 3/28, F23R 3/36

(54) **COMBUSTOR NOZZLE, COMBUSTOR, AND GAS TURBINE INCLUDING SAME**

(30) Priority: 15.12.2023 KR 20230183668
(71) Applicant: Doosan Enerbility Co., Ltd., Seongsan-gu Changwon-si, Gyeongsangnam-do 51711 (KR)
(72) Inventor: LIM, Joong Hyun, 51415 Changwon-si, Gyeongsangnam-do (KR); GO, Young Gun, 17065 Yongin-si, Gyeonggi-do (KR); KIM, Ho Keun, 34070 Daejeon (KR); CHO, Eun Seong, 46277 Busan (KR)
(74) Representative: BCKIP Part mbB

(57) **Abstract**

A combustor nozzle 1400 includes a plurality of mixing tubes 1420 through which air and fuel flow, one or more accommodation tubes 1410 each accommodating and supporting the plurality of mixing tubes 1420 therein, a first fuel tube 1431 coupled to each accommodation tube 1410 to supply a first fuel into the accommodation tube 1410, a second fuel tube 1432 coupled to each accommodation tube 1410 to supply a second fuel into the accommodation tube 1410, and a fuel supply member 1460 supplying the first fuel accommodated in the accommodation tube 1410 into each mixing tube 1420, wherein the accommodation tube 1410 has a fuel container 1436 combined with the second fuel tube 1432 to contain the second fuel therein, and an auxiliary injection member 1470 is disposed on the fuel container 1436 to inject the second fuel from the accommodation tube 1410.

## Description

The present application claims priority to Korean Patent Application No. 10-2023-0183668, filed on December 15, 2023.

### TECHNICAL FIELD

The present invention relates to a combustor nozzle, a combustor, and a gas turbine and, more particularly, to a combustor nozzle using hydrogen-containing fuel, a combustor, and a gas turbine including the same.

### BACKGROUND

A gas turbine is a combustion engine in which a mixture of air compressed by a compressor and fuel is combusted to produce a high temperature gas, which drives a turbine. A gas turbine may used to drive electric generators, aircraft, ships, trains, or the like.

A gas turbine generally includes a compressor, a combustor, and a turbine. The compressor serves to intake external air, compress the air, and transfer the compressed air to the combustor. The compressed air compressed by the compressor has a high temperature and a high pressure. The combustor serves to mix compressed air from the compressor and fuel and combust the mixture of compressed air and fuel to produce combustion gases, which are discharged to the gas turbine. The combustion gases drive turbine blades in the turbine to produce power. The power generated through the above processes may be applied to a variety of fields such as generation of electricity, driving of mechanical units, etc.

Fuel is injected through nozzles disposed in respective combustors, wherein the fuel includes gaseous fuel and liquid fuel. In recent years, in order to suppress the emission of carbon dioxide, use of hydrogen fuel or a fuel containing hydrogen is recommended.

However, since hydrogen has a high combustion rate, when such fuels are burned with a gas turbine combustor, the flame formed in the gas turbine combustor approaches and heats the structure of the gas turbine combustor, thereby degrading the reliability of the gas turbine combustor.

To solve this problem, a combustor nozzle having multiple tubes is proposed in KR 2020-0027894 A. The nozzle with multiple tubes is efficient for combustion of hydrogen by discharging fuel at a high speed, but when hydrocarbon-based fuel such as natural gas is supplied to the multiple tubes, the fuel is injected at an excessively high speed, causing the flame to escape from the nozzle. As a result, the combustor with multiple tubes has the problem of not being able to burn a wide variety of fuels.

### SUMMARY OF THE INVENTION

Accordingly, the present invention has been made keeping in mind the above problems occurring in the related art, and an object of the present invention is to provide a combustor nozzle capable of burning a variety of fuels other than hydrogen-based fuels, a combustor, and a gas turbine including the same.

To this end, the present invention provides a combustor nozzle in accordance with claim 1, a combustor in accordance with claim 12, and a gas turbine in accordance with claim 13. Advantageous embodiments are subject to the dependent claims and the following description, referring to the drawings.

An aspect of the present invention provides a combustor nozzle including: a plurality of mixing tubes through which air and fuel flow; at least one or a plurality of accommodation tubes each accommodating and supporting the plurality of mixing tubes therein; a first fuel tube coupled to each accommodation tube to supply a first fuel into the accommodation tube; a second fuel tube coupled to each accommodation tube to supply a second fuel into the accommodation tube; a fuel supply member supplying the first fuel accommodated in the accommodation tube into each mixing tube; wherein the accommodation tube has a fuel container combined with the second fuel tube to contain the second fuel therein, and an auxiliary injection member is disposed on the fuel container to inject the second fuel from the accommodation tube.

The accommodation tube may define an interior space and extend in a longitudinal direction between a first or leading end, and a second or rear end. Each mixing tube may have an outlet for discharging the air and fuel flow. For example, the mixing tubes may extend along the longitudinal direction within the interior space of the accommodation tube, and the outlet of the mixing tube may be disposed in the region of or at the first end of the accommodation tube. The mixing tubes, optionally, may have a cross-section of a hollow cylinder.

The fuel container may be disposed in the interior space of the accommodation tube, and the fuel container may be or define a volume that is separated from the remaining of the interior space defined by the accommodation tube. The space defined by the accommodation tube itself and being separated from the inner volume of the fuel container may also be referred to as distribution space. The first fuel tube may extend into the interior space defined by the accommodation tube and may be configured to discharge fuel directly into the distribution space. The second fuel tube may be connected to the inner volume of the fuel container so as to be configured to discharge fuel into the fuel container.

Each fuel supply member forms a fluid communication between the distribution space and a respective mixing tube. Thus, the fuel supply member connects the interior space of the accommodation tube outside the fuel container to the respective mixing tube.

The auxiliary injection member connects the fuel container to an outside of the accommodation tube to inject fuel contained in the fuel container, e.g., into a combustion chamber. The auxiliary injection member may define a passage for injecting the second fuel.

The auxiliary injection member may be arranged between the mixing tubes. For example, one auxiliary injection member may be arranged between at least two mixing tubes.

A mixture of air and the first fuel may be injected into the mixing tube, and only the second fuel may be injected into the auxiliary injection member. For example, the mixing tube may have an inlet configured for being connected to a source of air, e.g., an outlet of a compressor of a turbine, to receive air. Additionally, the respective mixing tube may receive the first fuel through the fuel supply member from the interior space of the accommodation tube. The auxiliary injection member may be connected exclusively to the fuel container which is supplied only with the second fuel through the second fuel tube.

The mixing tube may form a main flame, and the auxiliary injection member may form a fixed flame connected with the main flame to fix the main flame to the nozzle.

The auxiliary injection member may form a fixed flame connected with the plurality of main flames to fix the main flames.

The nozzle may further include: a tip plate formed on the front side thereof; and a middle plate spaced apart from the tip plate to define a fuel container, wherein the second fuel tube is inserted into the middle plate.

The auxiliary injection member may include: a central injection tube part extending; and a plurality of inclined injection tube parts connected to the central injection tube part to extend radially symmetrically from the central injection tube part. The central injection tube part may extend longitudinally. For example, a central axis of the central injection tube part may extend in the longitudinal direction of the accommodation tube. Generally, the central injection tube part may extend in the longitudinal direction of the accommodation tube part. The inclined injection tube parts, which may also be referred to as discharge tube parts, may branch off from the central injection tube part. Preferably, the discharge tube parts may extend radially symmetrically from the central injection tube part. That is, a spacing or distance along a circumferential direction may be equal between the inclined injection tube parts, wherein the circumferential direction may extend around the longitudinal or central axis of the central injection tube part.

The auxiliary injection member may be provided with a central passage and a plurality of discharge passages connected to the central passage to extend inclined to the longitudinal direction of the central passage. That is, the auxiliary injection member may be provided internally with the central passage and the discharge passages. For example, the auxiliary injection member may be a cylindrical or, generally, block shaped member extending between a first and a second end, and the central passage and the discharge passages may be formed within the cross-section of the auxiliary injection member. The central passage may, for example, extend in the longitudinal direction of the accommodation tube. The discharge passages may branch off from the central passage and extend inclined relative to a central axis of the central passage. The central passage may form an inlet at the first end of the auxiliary injection member. Each discharge passage may form an outlet at the second end of the auxiliary injection member. An inner diameter of the central passage, optionally, decreases with increasing distance from the first end of the auxiliary injection member.

Another aspect of the present invention provides a combustor including: a burner having a plurality of nozzles through which fuel and air are injected; and a duct assembly coupled to one side of the burner to allow the fuel and the air to be combusted therein and combustion gases to be transferred to a turbine, wherein the nozzle includes: a plurality of mixing tubes through which air and fuel flow; one or more accommodation tubes each accommodating and supporting the plurality of mixing tubes therein; a first fuel tube coupled to each accommodation tube to supply a first fuel into the accommodation tube; a second fuel tube coupled to each accommodation tube to supply a second fuel into the accommodation tube; a fuel supply member supplying the first fuel accommodated in the accommodation tube into each mixing tube; wherein the accommodation tube has a fuel container combined with the second fuel tube to contain the second fuel therein, and an auxiliary injection member is disposed on the fuel container to inject the second fuel from the accommodation tube.

The auxiliary injection member may be arranged between the mixing tubes.

A mixture of air and the first fuel may be injected into the mixing tube, and only the second fuel may be injected into the auxiliary injection member.

The mixing tube may form a main flame, and the auxiliary injection member may form a fixed flame connected with the main flame to fix the main flame to the nozzle.

The auxiliary injection member may form a fixed flame connected with the plurality of main flames to fix the main flames.

The accommodation tube may include: a tip plate formed on the front side thereof; and a middle plate spaced apart from the tip plate to define a fuel container, wherein the second fuel tube is inserted into the middle plate.

The auxiliary injection member may include: a central injection tube part extending in the longitudinal direction of the accommodation tube; and a plurality of inclined injection tube parts connected to the central injection tube part to extend radially symmetrically from the central injection tube part.

The auxiliary injection member may be internally provided with a central passage and a plurality of discharge passages connected to the central passage to extend inclined to the longitudinal direction of the central passage.

A further aspect of the present invention provides a gas turbine including: a compressor compressing an externally introduced air; a combustor mixing the compressed air from the compressor with fuel to produce a mixture and combusting the mixture; and a turbine having a plurality of turbine blades rotated by the combustion gases from the combustor, wherein the combustor includes: a burner having a plurality of nozzles through which fuel and air are injected; and a duct assembly coupled to one side of the burner to allow the fuel and the air to be combusted therein and combustion gases to be transferred to a turbine, wherein the nozzle includes: a plurality of mixing tubes through which air and fuel flow; at least one accommodation tube each accommodating and supporting the plurality of mixing tubes therein; a first fuel tube coupled to each accommodation tube to supply a first fuel into the accommodation tube; a second fuel tube coupled to each accommodation tube to supply a second fuel into the accommodation tube; a fuel supply member supplying the first fuel accommodated in the accommodation tube into each mixing tube; wherein the accommodation tube has a fuel container combined with the second fuel tube to contain the second fuel therein, and an auxiliary injection member is disposed on the fuel container to inject the second fuel from the accommodation tube.

The auxiliary injection member may be arranged between the mixing tubes.

A mixture of air and the first fuel may be injected into the mixing tube, and only the second fuel may be injected into the auxiliary injection member.

The mixing tube may form a main flame, and the auxiliary injection member may form a fixed flame connected with the main flame to fix the main flame to the nozzle.

The features and advantages disclosed in connection with one aspect of the invention are also disclosed for the other aspects of the invention and vice versa.

### BRIEF DESCRIPTION OF THE DRAWINGS

FIG. 1 is a diagram illustrating the interior of a gas turbine according to a first embodiment of the present invention;
FIG. 2 is a cross-sectional diagram illustrating a combustor of FIG. 1;
FIG. 3 is a front diagram illustrating a burner according to the first embodiment of the present invention;
FIG. 4 is a longitudinal cross-sectional diagram illustrating a nozzle according to the first embodiment of the present invention;
FIG. 5 is a longitudinal sectional diagram illustrating mixing tubes according to the first embodiment of the present invention;
FIG. 6A is a diagram illustrating a portion of a nozzle according to a first embodiment of the present invention;
FIG. 6B is a diagram illustrating a portion of a nozzle according to a first variant of the first embodiment of the present invention;
FIG. 6C is a diagram illustrating a portion of a nozzle according to a second variant of the first embodiment of the present invention;
FIG. 7 is a perspective diagram illustrating an auxiliary injection member according to a second embodiment of the present invention;
FIG. 8 is a longitudinal sectional diagram illustrating an auxiliary injection member according to a third embodiment of the present invention; and
FIG. 9 is a front diagram illustrating an auxiliary injection member according to the third embodiment of the present invention.

### DETAILED DESCRIPTION OF EXEMPLARY EMBODIMENTS

Hereinafter, exemplary embodiments of the present invention will be described in detail with reference to the accompanying drawings. However, it should be noted that the present invention is not limited thereto.

Terms used herein are used to merely describe specific embodiments, and are not intended to limit the present invention. As used herein, an element expressed as a singular form includes a plurality of elements, unless the context clearly indicates otherwise. Further, it will be understood that the terms "including" or "including" specify the presence of stated features, numbers, steps, operations, elements, parts, or combinations thereof, but does not preclude the presence or addition of one or more other features, numbers, steps, operations, elements, parts, or combinations thereof. Hereinafter, preferred embodiments of the present invention will be described in detail with reference to the accompanying drawings.

Hereinafter, preferred embodiments of the present invention will be described in detail with reference to the accompanying drawings. It is noted that like elements are denoted in the drawings by like reference symbols as whenever possible. Further, the detailed description of known functions and configurations that may obscure the gist of the present invention will be omitted. For the same reason, some of the elements in the drawings are exaggerated, omitted, or schematically illustrated.

Hereinafter, a gas turbine according to a first embodiment of the present invention will be described.

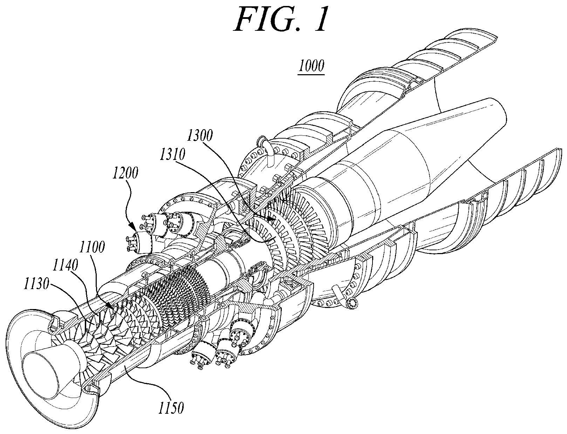

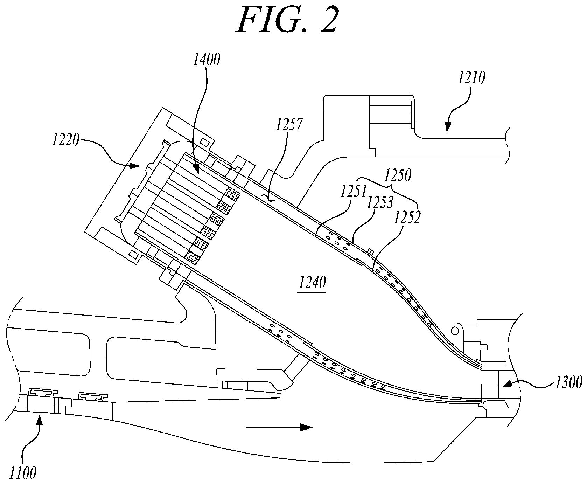

FIG. 1 is a diagram illustrating the interior of a gas turbine according to a first embodiment of the present invention, and FIG. 2 is a cross-sectional diagram illustrating a combustor of the gas turbine shown in FIG. 1.

An ideal thermodynamic cycle of a gas turbine 1000 according to the present embodiment may follow a Brayton cycle. The Brayton cycle consists of four thermodynamic processes: isentropic compression (adiabatic compression), isobaric combustion, isentropic expansion (adiabatic expansion) and isobaric heat ejection. That is, in the Brayton cycle, atmospheric air is sucked and compressed into high pressure air, mixed gas of fuel and compressed air is combusted at constant pressure to discharge heat energy, heat energy of hot expanded combustion gas is converted into kinetic energy, and exhaust gases containing remaining heat energy is discharged to the outside. That is, gases undergo four thermodynamic processes: compression, heating, expansion, and heat ejection.

As illustrated in FIG. 1, the gas turbine 1000 employing the Brayton cycle includes a compressor 1100, a combustor 1200, and a turbine 1300. Although the following description will be described with reference to FIG. 1, the present invention may be widely applied to other turbine engines similar to the gas turbine 1000 illustrated in FIG. 1.

Referring to FIG. 1, the compressor 1100 of the gas turbine 1000 may suck and compress air. The compressor 1100 may serve both to supply the compressed air by compressor blades 1130 to a combustor 1200 and to supply the cooling air to a high temperature region of the gas turbine 1000. Here, since the sucked air undergoes an adiabatic compression process in the compressor 1100, the air passing through the compressor 1100 has increased pressure and temperature.

The compressor 1100 may be designed as a centrifugal compressor or an axial compressor. The centrifugal compressor may, for example, be applied to a small-scale gas turbine, whereas a multi-stage axial compressor may be applied to a large-scale gas turbine 1000 illustrated in FIG. 1 since the large-scale gas turbine 1000 is required to compress a large amount of air. In this case, in the multi-stage axial compressor, the compressor blades 1130 of the compressor 1100 rotate according to the rotation of the rotor disks to compress the introduced air and move the compressed air to the compressor vanes 1140 on the rear stage. As the air passes through the compressor blades 1130 formed in multiple stages, the air is compressed to a higher pressure.

The compressor vanes 1140 are mounted inside the housing 1150 in stages. The compressor vanes 1140 guide the compressed air moved from the front side or upstream compressor blades 1130 toward the rear-side or downstream compressor blades 1130. Optionally, at least some of the compressor vanes 1140 may be mounted so as to be rotatable within a predetermined range, e.g., about an axis extending substantially in a radial direction, for adjustment of an air inflow, or the like.

The compressor 1100 may be driven using a portion of the power output from the turbine 1300. To this end, as illustrated in FIG. 1, the rotary shaft of the compressor 1100 and the rotary shaft of the turbine 1300 may be directly connected. In the case of the large-scale gas turbine 1000, almost half of the output produced by the turbine 1300 may be consumed to drive the compressor 1100. Accordingly, improving the efficiency of the compressor 1100 has a direct effect on improving the overall efficiency of the gas turbine 1000.

The turbine 1300 includes a rotor disk 1310 and a plurality of turbine blades and turbine vanes radially disposed on the rotor disk 1310. The rotor disk 1310 has a substantially disk shape on which a plurality of grooves is formed. The grooves may be formed to have curved surfaces, and turbine blades and turbine vanes are inserted into the grooves. The turbine vanes are fixed against rotation and guide a flow of combustion gases through the turbine blades. The turbine blades are rotated by combustion gases to generate rotational force.

The combustor 1200 serves to mix the compressed air supplied from an outlet of the compressor 1100 with fuel and combust the mixture of air and fuel at constant pressure to produce hot combustion gases. FIG. 2 illustrates an example of the combustor 1200 provided in the gas turbine 1000. The combustor 1200 may include a combustor casing 1210, burners 1220, nozzles 1400, and a duct assembly 1250.

The combustor casing 1210 may have a substantially circular shape in which the burners 1220 are surrounded. The burners 1220 are disposed downstream of the compressor 1100 and may be disposed along the annular combustor casing 1210. Each burner 1220 may be provided with a plurality of nozzles 1400, and fuel injected from the nozzles 1400 is mixed with air in an appropriate ratio to achieve a suitable state for combustion.

The gas turbine 1000 may use a gas fuel, in particular, a fuel containing hydrogen. The fuel may include a hydrogen fuel alone or a fuel containing hydrogen and natural gas.

The duct assembly 1250 is provided to connect the burners 1220 and the turbine 1300 so that the hot combustion gas flows therethrough which may heat the duct assembly, whereas the compressed air flows towards the nozzles 1400 along an outer surface of the duct assembly 1250, thereby properly cooling the heated duct assembly 1250.

The duct assembly 1250 may include a liner 1251 and a transition piece 1252, and a flow sleeve 1253. The duct assembly 1250 has a double structure in which the flow sleeve 1253 surrounds the outside of the liner 1251 and the transition piece 1252, so that compressed air penetrates into an annular space inside the flow sleeve 1253 to cool the liner 1251 and the transition piece 1252.

The liner 1251 is a tube member connected to the burners 1220 of the combustor 1200, wherein an internal space of the liner 1251 defines a combustion chamber 1240. A longitudinal one side of the liner 1251 is coupled to the burner 1220, and the other side of the liner 1251 is coupled to the transition piece 1252.

The transition piece 1252 is connected an inlet of the turbine 1300 to guide the hot combustion gas toward the turbine 1300. A first side of the transition piece 1252 is coupled to the liner 1251, and a longitudinally opposite second side of the transition piece 1252 is coupled to the turbine 1300. The flow sleeve 1253 serves to protect the liner 1251 and the transition piece 1252 while avoiding direct exhaust of hot air to the outside.

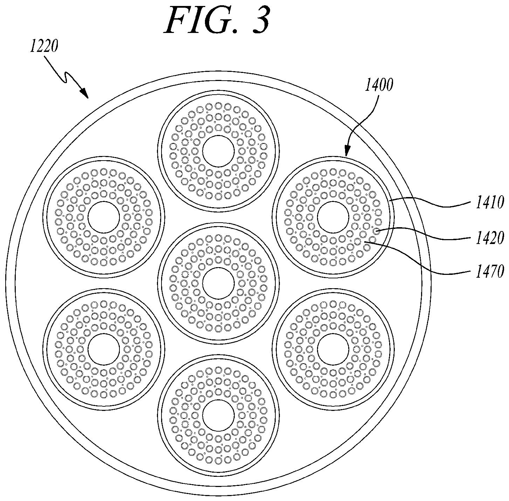

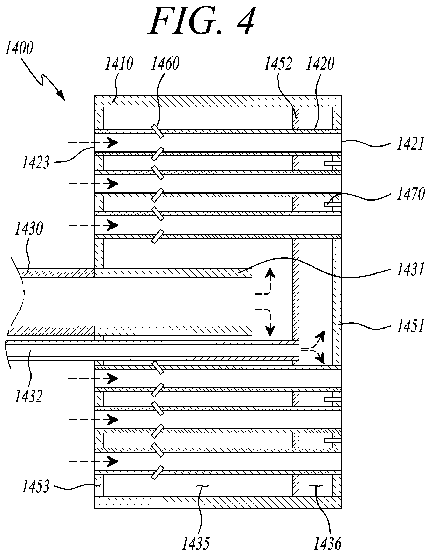

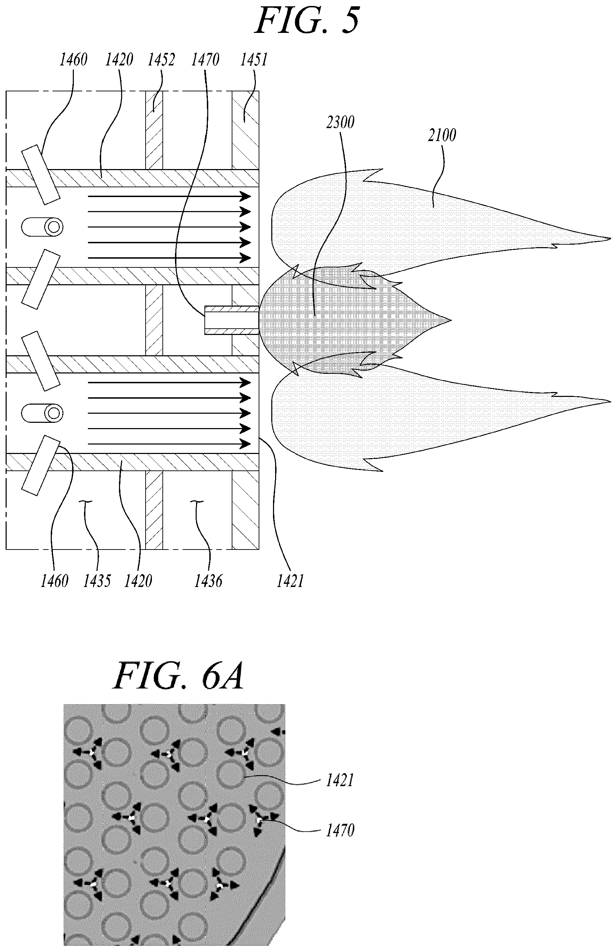

FIG. 3 is a front diagram illustrating a burner according to the first embodiment of the present invention, FIG. 4 is a longitudinal cross-sectional diagram illustrating a nozzle according to the first embodiment of the present invention, and FIG. 5 is a longitudinal sectional diagram illustrating a mixing tube according to the first embodiment of the present invention.

Referring to FIGS. 3 to 5, the nozzle 1400 may include a plurality of mixing tubes 1420 through which air and fuel flow, one or more accommodation tubes 1410 each accommodating multiple mixing tubes 1420, and first and second fuel tubes 1431 and 1432 installed inside the accommodation tube 1410. Optionally, the nozzle 1400 may further include a tip plate 1451 coupled to a leading end or first end of the accommodation tube 1410 and/or a rear plate 1453 coupled to a rear end or second end of the accommodation tube 1410. Further optionally, a middle plate 1452 may be arranged int the interior of accommodation tube 1410 between the first and the second end and may be coupled to the accommodation tube 1410.

The accommodation tube 1410 may be cylindrical in shape, with a cavity formed therein. Generally, the accommodation tube 1410 may define an interior space and extend in a longitudinal direction between the first or leading end and the rear or trailing end. The nozzle 1400 may further include a fuel supply tube 1430 that supplies a first fuel to the accommodation tube 1410, e.g., into the interior space defined by the accommodation tube 1410. Here, the first fuel may include a hydrogen-based fuel having hydrogen as a major component or a hydrocarbon-based fuel having hydrocarbon as a major component. The first fuel may also include a mixture of a hydrogen-based fuel and a hydrocarbon-based fuel.

As used herein, "hydrogen-based fuel" may be understood as a fuel having a concentration of at least 70 wt% hydrogen. A "hydrocarbon-based fuel" may be understood as a fuel having a concentration of at least 70 wt% hydrocarbon. The hydrocarbon-based fuel may include natural gas or the like.

The first fuel tube 1431 may be disposed at the radial center of the accommodation tube 1410 to provide a space for the first fuel to flow. For example, the first fuel tube 1431 may be arranged coaxially with a center axis of the accommodation tube 1410. The first fuel tube 1431 may be disposed in or extend into the interior space defined by the accommodation tube 1410. A first longitudinal end of the first fuel tube 1431 is connected to the fuel supply tube 1430 to receive fuel, and a second longitudinal end of the first fuel tube 1431 is connected to or in communication with a distribution space 1435 defined in the accommodation tube 1410 to supply fuel to the distribution space 1435. For example, the distribution space 1435 may be defined, with respect to a longitudinal direction of the accommodation tube 1410, between the middle plate 1452 and the rear plate 1453.

The tip plate 1451 is coupled to the leading end of the accommodation tube 1410. Leading ends of the mixing tubes 1420 may inserted into the tip plate 1451, i.e., in respective openings formed in the tip plate 1451.

The middle plate 1452 is spaced from the tip plate 1451 toward the rear end (toward an upstream side) of the accommodation tube 1410 and coupled to the accommodation tube 1410. Generally, the middle plate 1452 may be spaced from the leading end and the rear end of the accommodation tube 1410 so as to be arranged between the leading and the trailing end. The fuel container 1436 may be defined between the middle plate 1452 and the tip plate 1451, and fuel supplied from the second fuel tube 1432 may be received and contained in the fuel container 1436. The middle plate 1452 may be positioned further forward (downstream) than a longitudinal center of the accommodation tube 1410. For example, a distance between the second end of the accommodation tube 1410 and the middle plate 1452 may be greater than half of the distance between the second end and the first end of the accommodation tube 1410.

The rear plate 1453 is secured to the second end or rear end (upstream side) of the accommodation tube 1410 to define a distribution space 1435 with the middle plate 1452. The distribution space 1435 preferably has a greater volume than the fuel container 1436.

The second fuel tube 1432 may be radially spaced apart from the first fuel tube 1431 or may be placed radially adjacent to the first fuel tube 1431. and the second fuel tube 1432 is connected to the fuel container 1436 to supply a second fuel to the fuel container 1436. Here, the second fuel may include a hydrocarbon-based fuel having hydrocarbon as a major component, in particular natural gas.

Each mixing tube 1420 may be formed to extend through the rear plate 1453, the middle plate 1452, and the tip plate 1451. At the leading end of the mixing tube 1420, an outlet 1421 may be formed for fuel and air to exit, and at the trailing end of the mixing tube 1420, an inlet 1423 may be formed for air to enter.

The plurality of mixing tubes 1420 are distributed inside the accommodation tube 1410, e.g., in the interior space defined by the accommodation tube 1410, to accommodate and mix fuel and air and inject the fuel-air mixture into the combustion space. The mixing tubes 1420, respectively, may be formed with a circular tube with a relatively small diameter to allow the fuel and air to be injected at high speed.

A fuel supply member 1460 may be disposed on each mixing tube 1420 to supply a first fuel into the respective mixing tube 1420. The fuel supply member 1460 is connected with the distribution space 1435 to inject the first fuel from the distribution space 1435 into the mixing tube 1420..In other words, the first fuel supply member 1460 connects the distribution space 1435 to the respective mixing tube 1420. For example, the fuel supply member 1460 may have an inlet connected to the distribution space 143 5, and an outlet connected to the mixing tube 1420.

The fuel supply member 1460 may be tubular in shape. Preferably, the fuel supply member 1460 may slope forward (downstream) with respect to a radial direction of the mixing tube 1420. That is, a central axis of the fuel supply member 1460 may form an acute angle smaller than 90 degrees with a central axis of the mixing tube 1420. The outlet of the first fuel supply member 1460, therefore, may be oriented towards the center of the mixing tube 1420 and towards the front end or outlet of the mixing tube 1420. Optionally, the fuel supply member protrude into the mixing tube 1420. Further optionally, a plurality of fuel supply members 1460 may be circumferentially disposed on the respective mixing tube 1420 so as to be spaced apart from each other.

An auxiliary injection member 1470 may be disposed on the fuel container 1436 to inject the second fuel to the outside of the accommodation tube 1410, e.g., into the combustion chamber 1240. For example, the auxiliary injection members 1470 may be configured to inject the second fuel from the front side of the accommodation tube 1410. For example, a plurality of auxiliary injection members 1470 may be installed on the accommodation tube 1410. Therefore, in the following, the plural is mostly used to describe the configuration of an auxiliary injection member 1470. However, it should be understood that all descriptions also are valid for a configuration with only one auxiliary injection member. The auxiliary injection members 1470, optionally, may be tubular or substantially tubular in shape.

The auxiliary injection members 1470 may be positioned between the mixing tubes 1420 so as to extend through the tip plate 1451. The auxiliary injection members 1470 are connected to or in communication with the fuel container 1436 to inject only the second fuel without air toward the front side of the accommodation tube 1410.

As illustrated in FIG. 5, a main flame 2100 is formed by the air and first fuel injected from the mixing tubes 1420, and a fixed flame 2300 is formed by the second fuel injected from the auxiliary injection member 1470.

If the first fuel is a hydrocarbon-based fuel such as natural gas, the main flame 2100 may be delaminated at the outlet end of the mixing tube 1420 due to its slower combustion rate compared to hydrogen. However, the auxiliary injection member 1470 slowly injects a second fuel with a higher fuel concentration so that the fixed flame 2300 may be formed by the second fuel, and the fixed flame 2300 may fix the main flame 2100 to the nozzle to prevent flame blowout and maintain a stable flame.

One auxiliary injection member 1470 may form the fixed flame 2300 connected to a plurality of main flames 2100 to fix the plurality of main flames 2100. That is, one fixed flame 2300 may be connected with multiple main flames 2100. Further, one main flame 2100 may be connected with one or more fixed flames 2300. For example, one respective auxiliary injection member 1470 may be positioned between multiple mixing tubes 1420.

The first fuel may include hydrogen, natural gas, or a mixture of hydrogen and natural gas. If the first fuel is hydrogen, the second fuel may not be supplied through the auxiliary injection member 1470 because the flame may remain stable even when the second fuel is not supplied. However, if the first fuel is a mixture of hydrogen and natural gas or a natural gas fuel, the second fuel is supplied through the auxiliary injection member 1470 to maintain a stable flame.

As illustrated in FIGS. 6A to 6C, the auxiliary injection member 1470 may be disposed in various configurations between the plurality of mixing tubes 1420. For example, as illustrated in FIG. 6A, one auxiliary injection member 1470 may be disposed between three mixing tubes 1420 such that the main flame 2100 formed by one mixing tube 1420 is connected to a single fixed flame 2300. For example, three mixing tubes 1420 may surround one auxiliary injection member 1470.

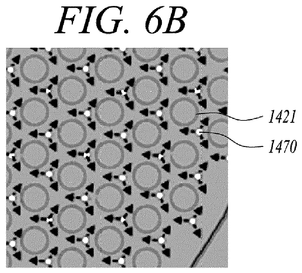

Also, as illustrated in FIG. 6B, one auxiliary injection member 1470 may be disposed between the three mixing tubes 1420 such that the main flame 2100 formed by one mixing tube 1420 is connected to a plurality of fixed flames 2300. For example, three mixing tubes 1420 may surround one auxiliary injection member 1470, wherein a respective mixing tube 1420 may be neighbored to more than one auxiliary injection member 1470.

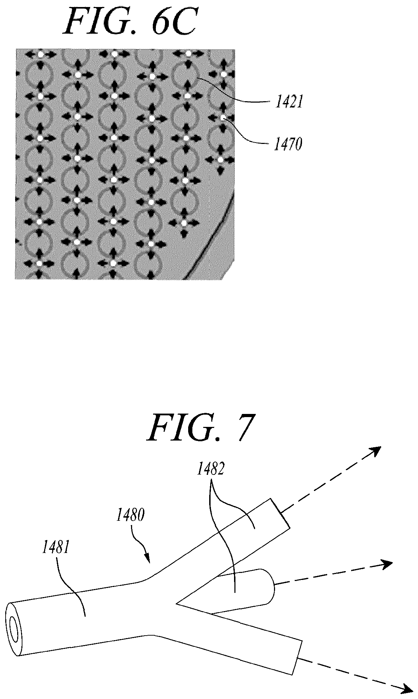

Further, as illustrated in FIG. 6C, one auxiliary injection member 1470 may be disposed between the two mixing tubes 1420 such that the main flame 2100 formed by the one mixing tube 1420 is connected to a plurality of fixed flames 2300. For example, the mixing tubes 1420 and the auxiliary injection members 1470 may be placed alternating in a row.

However, the present invention is not limited thereto, and the auxiliary injection member 1470 may be arranged in various configurations.

As described above, the present embodiment enables mixing and combustion of hydrocarbon-based fuel such as natural gas in the nozzle designed for combustion of hydrogen, and the flame is maintained by the second fuel regardless of the flow rate of the first fuel, so that the flow rate of the first fuel may be controlled to easily control occurrence of vibration and generation of carbon monoxide and nitrogen oxide.

Hereinafter, a nozzle according to a second embodiment of the present invention will be described.

FIG. 7 is a longitudinal sectional diagram illustrating an auxiliary injection member according to a second embodiment of the present invention.

Referring to FIG. 7, the nozzle according to the second embodiment has the same structure as the nozzle according to the first embodiment described above, except for an auxiliary injection member 1480. Therefore, a repeated description of the same configuration will be omitted.

The auxiliary injection member 1480 may be disposed on the accommodation tube to inject the second fuel to the outside of the accommodation tube 1410, e.g., into the combustion chamber 1240. For example, the auxiliary injection member 1480 may be configured to inject the second fuel from the front side of the accommodation tube 1410. The auxiliary injection member 1480 may be tubular or substantially tubular in shape. For example, as shown in FIG. 7, the auxiliary injection member 1480 may include a central injection tube part 1481 and a plurality of inclined injection tube parts 1482 connected to the central injection tube part 1481. The central injection tube part 1481 may extend longitudinally through the accommodation tube 1410. The inclined injection tube parts 1482 may extend inclined to the central injection tube part 1481. The inclined injection tube parts 1482 may branch off from the central injection tube part 1481. The plurality of inclined injection tube parts 1482 may be formed radially symmetrically from the central injection tube part 1481. For example, a spacing along a circumferential direction may be equal between the inclined injection tube parts 1482. The circumferential direction, in this case, may extend around a longitudinal or central axis of the central injection tube part 1481. As exemplarily shown in FIG. 7, three inclined injection tube parts 1482 may be connected to one central injection tube part 1481. However, the present invention is not limited thereto, and two or four inclined injection tube parts 1482 may be connected to one central injection tube part 1481. Generally, two or more inclined injection tube parts 1482 may be connected to one central injection tube part 1481. The inclined injection tube parts 1482 may also be referred to as discharge tube parts.

As noted above, according to the second embodiment, the auxiliary injection member 1480 includes the plurality of inclined injection tube parts 1482 so that a fixed flame may be formed wide enough to reliably support a plurality of main flames. Depending on the combustion situation, the shape and size of the main flame may vary, and the wider the auxiliary flame is formed, the more reliably the main flame is supported.

The following describes a nozzle according to a third embodiment of the present invention.

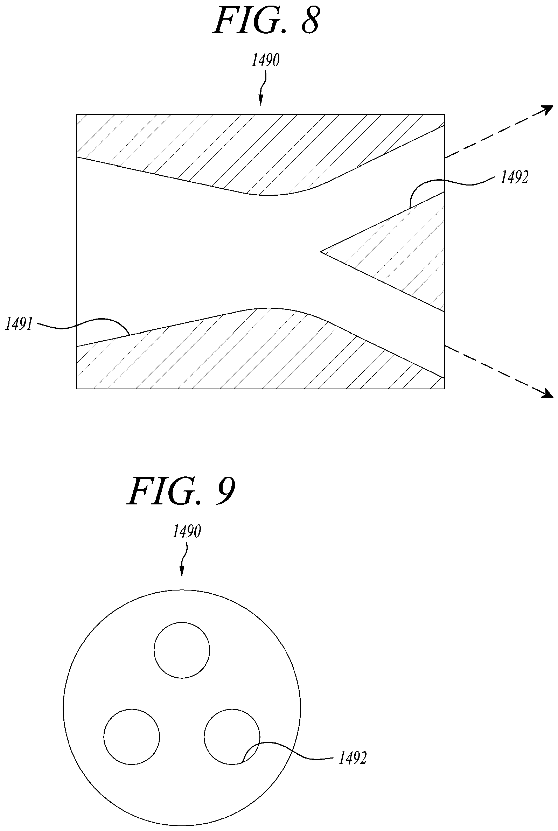

FIG. 8 is a longitudinal sectional diagram illustrating an auxiliary injection member according to a third embodiment of the present invention, and FIG. 9 is a front diagram illustrating an auxiliary injection member according to the third embodiment of the present invention.

Referring to FIGS. 8 and 9, the nozzle according to the third embodiment has the same structure as the nozzle according to the first embodiment described above, except for an auxiliary injection member 1490. Therefore, a repeated description of the same configuration will be omitted.

The auxiliary injection member 1490 may be disposed on the accommodation tube to inject the second fuel toward the front side of the accommodation tube. The auxiliary injection member 1490 may be a cylindrical tube or member internally provided with a central passage 1491 and a plurality of discharge passages 1492 connected to the central passage 1491. The auxiliary injection member 1490 may extend between a first end, where an inlet is formed, and a second end, where multiple outlets are formed. The central passage 1491 may extend longitudinally within the auxiliary injection member 1490 and have an inner diameter which gradually decreases from the first end towards the second end.

The discharge passages 1492 branch off from the central passage 1491 and may extend inclined to the longitudinal direction of the central passage 1491. Preferably, the discharge passages 1492 may have a uniform inner diameter. The discharge passages 1492 extend to the second end of the auxiliary injection member 1490, and each discharge passage 1492 forms one outlet for discharging the second fuel. The plurality of discharge passages 1492 may extend radially symmetrically from the central passage 1491. For example, a spacing along a circumferential direction may be equal between the discharge passages 1492. The circumferential direction, in this case, may extend around a longitudinal or central axis of the central passage 1491. As exemplarily shown in FIG. 8, three discharge passages 1492 may be connected to a one central passage 1491. However, the present invention is not limited thereto, and two or four discharge passages 1492 may be connected to a single central passage 1491. Generally, two or more discharge passages 1492 may be connected to one central passage 1491.

As noted above, according to the third embodiment, the auxiliary injection member 1490 is formed with the central passage 1491 and the plurality of discharge passages 1492, so that a fixed flame may be formed wide enough to reliably support a plurality of main flames.

While the embodiments of the present invention have been described, it will be apparent to those skilled in the art that various modifications and variations can be made in the present invention through addition, change, omission, or substitution of components without departing from the scope of the invention as set forth in the appended claims.

## Claims

1. A combustor nozzle (1400) for a combustor (1200) of a gas turbine (1000), comprising:
a plurality of mixing tubes (1420) for injecting an air and fuel flow;
an accommodation tube (1410) accommodating and supporting the plurality of mixing tubes (1420) therein;
a first fuel tube (1431) coupled to the accommodation tube (1410) to supply a first fuel into the accommodation tube (1410);
a fuel container (1436) disposed in the accommodation tube (1410); and
a second fuel tube (1432) coupled to the fuel container (1436) to supply a second fuel into the fuel container (1436);
wherein each mixing tube (1420) is provided with a fuel supply member (1460) configured to supply the first fuel from the accommodation tube (1410) into the respective mixing tube (1420), and
wherein an auxiliary injection member (1470, 1480, 1490) is disposed on the fuel container (1436) to inject the second fuel.

2. The combustor nozzle (1400) of claim 1, wherein the auxiliary injection member (1470) is arranged between the mixing tubes (1420).

3. The combustor nozzle (1400) of claim 1 or 2, wherein the mixing tubes (1420) are configured to inject a mixture of air and the first fuel, and the auxiliary injection member (1470) is configured to inject only the second fuel.

4. The combustor nozzle (1400) of any one of claims 1 to 3, wherein the mixing tubes (1420) are configured to form a main flame, and the auxiliary injection member (1470) is configured to form a fixed flame connected with the main flame to fix the main flame to the nozzle (1400).

5. The combustor nozzle (1400) of claim 4, wherein the auxiliary injection member (1470) is configured to form a fixed flame connected with a plurality of main flames to fix the main flames.

6. The combustor nozzle (1400) of any one of claims 1 to 5, further comprising:
a tip plate (1451) arranged on a first end of the accommodation tube (1410); and
a middle plate (1452) arranged within the accommodation tube (1410) spaced apart from the tip plate (1451),
wherein the tip plate (1451) and the middle plate (1452) define the fuel container (1436), and
wherein the second fuel tube (1432) is inserted into the middle plate (1452).

7. The combustor nozzle (1400) of any one of claims 1 to 6, wherein the auxiliary injection member (1480) comprises:
a central injection tube part (1481); and
a plurality of inclined injection tube parts (1482) connected to the central injection tube part (1481) and extending from and inclined to the central injection tube part (1481).

8. The combustor nozzle (1400) of claim 7, wherein the inclined injection tube parts (1482) are arranged radially symmetrically around the central injection tube part (1481).

9. The combustor nozzle (1400) of any one of claims 1 to 6, wherein the auxiliary injection member (1490) includes a central passage (1491) extending in a longitudinal direction and a plurality of discharge passages (1492) connected to the central passage (1491) and extending inclined to the longitudinal direction of the central passage (1491).

10. The combustor nozzle (1400) of claim 9, wherein the central passage (1491) extends from a first end of the auxiliary injection member (1490), the discharge passages (1492) branch off from the central passage (1492) and extend to a second end of the auxiliary injection member (1492).

11. The combustor nozzle (1400) of claim 10, wherein an inner diameter of the central passage decreases with increasing distance from the first end of the auxiliary injection member (1490).

12. A combustor (1200) for a gas turbine (1000), comprising:
a burner (1220) having a plurality of nozzles (1400) according to any one of the preceding claims for injecting fuel and air; and
a duct assembly (1250) coupled to one side of the burner (1220) to allow the fuel and the air to be combusted therein and combustion gases to be transferred to a turbine (1300).

13. A gas turbine (1000), comprising:
a compressor (1100) configured to compress externally introduced air;
a combustor (1200) configured to mix the compressed air from the compressor with fuel to produce a mixture of air and fuel and combust the mixture, the combustor being formed in accordance with claim 12; and
a turbine (1300) having a plurality of turbine (1300) blades rotatable by the combustion gases from the combustor (1200).
